Europäisches Patentamt

European Patent Office

Office européen des brevets

(19)

(11) Veröffentlichungsnummer: **0 295 665 B1**

# EUROPÄISCHE PATENTSCHRIFT

(12)

(45) Veröffentlichungstag der Patentschrift: **11.12.91**

(51) Int. Cl.⁵: **B23Q 3/155**, B25H 3/06

(21) Anmeldenummer: **88109577.2**

(22) Anmeldetag: **15.06.88**

(54) **Speicherplatte für Werkzeugmaschinen.**

(30) Priorität: **19.06.87 DE 8708517 U**

(43) Veröffentlichungstag der Anmeldung:
**21.12.88 Patentblatt 88/51**

(45) Bekanntmachung des Hinweises auf die
Patenterteilung:
**11.12.91 Patentblatt 91/50**

(84) Benannte Vertragsstaaten:
**AT BE CH DE ES FR GB GR IT LI LU NL SE**

(56) Entgegenhaltungen:
CH-A- 368 109
DE-A- 1 808 705
DE-A- 3 301 036
DE-A- 3 539 295
US-A- 3 365 761

(73) Patentinhaber: **Schmoll Maschinen GmbH Werkzeug- und Vorrichtungsbau Westerbachstrasse 4 W-6242 Kronberg(DE)**

(72) Erfinder: **Kunz, Hans c/o Keil & Schaafhausen, Eysseneckstrasse 31, W-6000 Frankfurt am Main 1(DE)**
Erfinder: **Rippel, Herbert c/o Keil & Schaafhausen, Eysseneckstrasse 31, W-6000 Frankfurt am Main 1(DE)**

(74) Vertreter: **Keil, Rainer A., Dipl.-Phys. Dr. et al KEIL & SCHAAFHAUSEN Patentanwälte Eysseneckstrasse 31 W-6000 Frankfurt am Main 1(DE)**

## Beschreibung

Die Erfindung bezieht sich auf eine Speicherplatte für vorzugsweise mit einer selbsttätigen Werkzeugwechseleinrichtung ausgerüsteten Werkzeugmaschine, bei welcher jedes eine Vielzahl von Werkzeugen von einem wenigstens eine beispielsweise im wesentlichen horizontal anzuordnende, entsprechende Werkzeugaufnahmelöcher aufweisende Speicherplatte enthaltenden Werkzeugmagazin mittels einer einen Greifer aufweisenden Werkzeugtransporteinrichtung aus der Speicherplatte beispielsweise nach unten herausgezogen und einer Arbeitseinheit übergeben, sowie nach Gebrauch aus der Arbeitseinheit beispielsweise nach unten herausgezogen, wieder zurück zur Speicherplatte gebracht und beispielsweise von unten in eines der Werkzeugaufnahmelöcher gesteckt wird, wobei die Speicherplatte wenigstens zwei aneinander befestigte, mit einer Vielzahl von jeweils zueinander fluchtenden Werkzeugaufnahmelöchern versehene plattenförmige Elemente aufweist, zwischen denen in Ausnehmungen wenigstens eines der plattenförmigen Elemente aufgenommene Mittel zum reibschlüssigen Halten der in einer beispielsweise im wesentlichen vertikalen Position angeordneten Werkzeuge in dem jeweiligen Werkzeugaufnahmeloch angeordnet sind.

Eine solche Speicherplatte ist beispielsweise aus der DE 33 01 036 A 1 bekannt. Es handelt sich dabei um eine gelochte Platte, welche aus zwei perforierten plattenförmigen Elementen besteht, von welchen eine dünner ist als die andere. Die beiden plattenförmigen Elemente sind aneinander befestigt und weisen in einer Matrix angeordnete Löcher auf. Die eine Platte trägt darüber hinaus wellenförmige Rillen, deren Tiefe geringer ist als die Materialstärke dieser Platte. Federdrähte liegen derart in den Rillen, daß sie in die Löcher eingreifen und auf den in die Löcher hineinragenden Abschnitt des jeweiligen Werkzeugs eine solche Reibung ausüben, daß es, von unten eingesetzt, am Herausfallen gehindert ist. Diese Lösung hat den Nachteil eines verhältnismäßig hohen Herstellungsaufwandes. Auch können die Federdrähte nicht immer einen zuverlässigen Sitz der Werkzeuge gewährleisten. Ein erheblicher Nachteil besteht auch darin, daß bei Erlahmen oder bleibenden Deformation der die Speicherplatte jeweils durchziehenden Federdrähte an einem Werkzeugaufnahmeloch, dessen zugeordnetes Werkzeug häufiger gebraucht wird als die übrigen, die jeweiligen Federdrähte insgesamt ausgewechselt werden müssen, was relativ aufwendig ist.

Aus der DE 18 08 705 A 1 ist ein Werkzeugmagazin für eine Werkzeugmaschine bekannt, welches eine Grundplatte mit einer Mehrzahl abgestufter Löcher und einem Werkzeughalter in jedem jener Löcher aufweist. Die stutzenförmigen Werkzeughalter weisen jeweils ein axiales Werkzeugaufnahmeloch auf, in welchem das jeweilige Werkzeug beispielsweise mit seinem Halteschaft von oben stehend aufgenommen ist. Um das Werkzeug in dem Magazin ausreichend festzuhalten und ein Herausfallen zu verhindern, sind in der zylindrischen Wandung des Werkzeugaufnahmeloches ringförmige Radialnuten vorgesehen, in welchen jeweils zwei O-Ringe aus nachgiebigem Material festsitzend aufgenommen sind und von der Wand vorstehen. Zwar können bei diesem bekannten Werkzeugmagazin defekte O-Ringe für jedes Werkzeugaufnahmeloch getrennt ausgetauscht werden, jedoch ist dies wegen der Anordnung in Radialnuten relativ zeitraubend. Zudem stellt diese Lösung mit von einer Grundplatte getragenen Vielzahl von Werkzeughaltern eine aufwendige Konstruktion dar, welche aufgrund der Breite der Magazinplatten nur für Sonderformen von Werkzeugmaschinen bestimmt ist.

Aus der DE 35 39 295 A 1 ist eine Speicherplatte bekannt, bei der eine mit einem Rechteck-Raster aus Löchern für die Aufnahme von Werkzeugen ausgestattete Grundplatte auf ihrer Oberseite mit einer Beschichtung aus elastischem nachgiebigem Material versehen ist, welche den Schaftaufnahmelöchern zugeordnete Durchbrechungen aufweist. Diese Durchbrechungen der Beschichtung sind gegenüber den Schaftaufnahmelöchern wenigstens über einen Teil ihrer Länge verengt, derart, daß die von der Beschichtung aus Kunststoff- oder Gummimaterial auf die Oberfläche eines Werkzeughalterschafts ausgeübten Reibungskräfte das Werkzeug in dem jeweiligen Werkzeugaufnahmeloch zu halten vermögen und gleichzeitig auf Grund der Elastizität des Materials ein leichtes Herausziehen des Werkzeugs aus der Speicherplatte zu ermöglichen. Nachteilig bei der Speicherplatte ist es, daß bei einer Materialermüdung der Beschichtung lediglich im Bereich eines einzigen häufig benutzten Werkzeugaufnahmelochs die gesamte Beschichtung abgelöst und erneuert werden muß.

Schließlich ist aus der US 33 65 761 C1 eine Schafthalteeinrichtung für Besenstiele o. dgl. Stiele bekannt, welche eine obere und untere Klemmplatte aufweist, mit miteinander fluchtenden Aufnahmeöffnungen für den Stiel. Dabei weisen die Öffnungen in der oberen Klemmplatte gegenüber denjenigen in der unteren einen größeren Durchmesser auf. Zwischen den Klemmplatten ist eine flexible Lage aus Plastik oder Gummimaterial eingespannt, welche mit den Annahmeöffnungen zugeordnete Löcher aufweist mit gegenüber den Aufnahmeöffnungen der Klemmplatten kleineren Durchmesser. Radiale Schlitze erstrecken sich vom Zentrum der Löcher der flexiblen Lage nach außen über den Rand der Öffnungen in der unteren Klemmplatte und enden jeweils etwa im Bereich der Berandung der Öffnungen in der oberen Klemmplatte. Die Halterung des Stiels in seiner Aufnahmeöffnung dieser Schafthalteeinrichtung erfolgt dadurch, daß sich die radial nach innen vorstehenden kreissektorförmigen Abschnitte aus flexiblem Material durch eine Abwärtsbewegung des Stiels infolge des Eigengewichts des aufgehängten Besenstiels an den Rand in der unteren Klemmplatte abstützen und eine reibschlüssige Haltekraft erzeugen. Diese bekannte Schafthalteeinrichtung ist jedoch als Speicherplatte für die Halterung von Werkzeugschäften bei Werkzeugmaschinen wegen der nicht definierten Lage der Schäfte ungeeignet. Auch ist diese Vorrichtung mit dem Nachteil behaftet, daß die gesamte Lage auch dann ausgetauscht werden muß, wenn eine Materialermüdung im Bereich nur eines Loches aufgetreten ist oder eines der kreissektorförmigen Abschnitte eines Loches beschädigt ist.

Aufgabe der Erfindung ist es daher, eine Speicherplatte der eingangs beschriebenen Art einfacher Konstruktion zuverlässiger und dauerhafter Funktionsfähigkeit zu schaffen, welche zudem wartungs- und reparaturfreundlicher ist.

Diese Aufgabe wird erfindungsgemäß dadurch gelöst, daß die in den plattenförmigen Elementen gebildeten Werkzeugaufnahmelöcher zum im wesentlichen spielfreien Halten der Werkzeuge ausgebildet sind und daß die Mittel zum reibschlüssigen Halten der Werkzeuge als jeweils einem Werkzeugaufnahmeloch zugeordnete, selbständig austauschbare Belegelemente aus elastisch nachgiebigem, vorzugsweise abriebfestem Material, z.B. Kunststoff oder Gummi, ausgebildet sind, welche ein dem jeweiligen Werkzeugaufnahmeloch zugeordnete diesem gegenüber wenigstens über ein Teil ihrer Länge geringfügig verengte Durchbrechung aufweisen.

Eine solche Speicherplatte ist sehr einfach herstellbar sowie zuverlässig und dauerhaft in ihrer Funktion. Darüber hinaus ist sie besonders wartungs- und reparaturfreundlich, da bei einem Defekt der Halterung eines Werkzeugaufnahmelochs für eine häufig angebrachtes Werkzeug lediglich das entsprechende Belegelement ersetzt werden muß. Dabei ist insbesondere eine gute Zugänglichkeit der Belegelemente durch Abnehmen eines der beiden plattenförmigen Elemente gegeben, so daß diese sich unabhängig von ihrer Form und Größe auswechseln lassen.

In einer ersten besonderen Ausführungsform der Erfindung ist es vorgesehen, daß die Dicke eines Belegelements geringer als die Höhe einer Ausnehmung ist. Hierdurch ist eine gewisse axiale Ausbiegbarkeit der Belegelemente in ihrem an die Durchbrechung angrenzenden Bereich beim Einstecken der Werkzeuge ermöglicht, so daß diese leicht beispielsweise von unten in die entsprechenden Werkzeugaufnahmelöcher eingesetzt werden können und die Belegelemente den jeweiligen Halteschaft der eingesetzten Werkzeuge in Endstellung besonders gut reibschlüssig halten.

Nach einem weiteren Vorschlag der Erfindung sind die Belegelemente als Flachringe ausgebildet, deren Durchbrechung jeweils einen vorzugsweise gegenüber dem jeweils angrenzenden Werkzeugaufnahmeloch geringfügig kleineren Durchmesser hat, wodurch bei sicherem Halt das Werkzeugschaftes ein guter Sitz der Belegelemente innerhalb der jeweiligen Ausnehmungen bei gleichzeitig geringer Bauhöhe der Speicherplatte erreicht ist.

Die Belegelemente können beispielsweise kreisringförmig sein, so daß handelsübliche Teile verwendbar sind.

Der Sitz der Belegelemente innerhalb der Ausnehmungen kann in Weiterbildung dieses Erfindungsgedankens noch dadurch verbessert werden, daß der Außendurchmesser der Belegelemente etwa dem Doppelten des Durchmessers der jeweiligen Durchbrechung entspricht.

Neben der Anordnung der Ausnehmungen für die Belegelemente in einer Seite eines plattenförmigen Elements ist es auch möglich, die Ausnehmungen durch sich einander ergänzende Vertiefungen in den einander zugewandten Seiten zweier plattenförmiger Elemente zu bilden.

Die den Halteschaft des jeweiligen Werkzeugs mit geringem Spiel aufnehmenden Werkzeugaufnahmelöcher sind bei einer besonderen Ausgestaltung des Erfindungsgedankens an ihrer beispielsweise nach unten zu kehrenden Außenseite, vorzugsweise konisch, aufgeweitet. Auf diese Weise lassen sich die Werkzeuge leicht von unten in die entsprechenden Werkzeugaufnahmelöcher unter selbsttätiger Zentrierung einsetzen, auch wenn der Greifer der Werkzeugtransporteinrichtung nicht genau unterhalb des entsprechenden Werkzeugaufnahmeloches steht.

Zweckmäßigerweise weisen die Werkzeugaufnahmelöcher in dem beispielsweise oberen plattenförmigen Element im wesentlichen den gleichen Durchmesser wie die jeweils angrenzenden Werkzeugaufnahmelöcher des beispielsweise unteren plattenförmigen Elements auf, so daß auch Werkzeuge mit an der Speicherplatte überstehendem Halteschaft aufgenommen werden können.

Die erfindungsgemäße Speicherplatte ermöglicht eine horizontale Anordnung innerhalb eines Werkzeugmagazins, wobei Werkzeuge von unten oder von oben in die Werkzeugaufnahmelöcher eingesteckt werden können, so daß die Werkzeuge im wesentlichen vertikal hängend oder stehen aufbewahrt werden.

Ebenso ist es jedoch möglich, die Speicherplatte im wesentlichen vertikal anzuordnen, wobei die Werkzeuge von der einen oder von der anderen Seite in die Werkzeugaufnahmelöcher einsteckbar sind.

Weitere Ziele, Vorteile und Anwendungsmöglichkeiten der vorliegenden Erfindung ergeben sich aus der nachfolgenden Beschreibung eines Ausführungsbeispiels anhand der Zeichnung.

Es zeigen:

Fig. 1     in Draufsicht eine die Erfindung aufweisende Speicherplatte von Fig. 2,

Fig. 2     eine Seitenansicht der Speicherplatte aus Richtung II von Fig. 1, und

Fig. 3     eine vergrößerte Detaildarstellung eines Ausschnittes der Speicherplatte von Fig. 2, teilweise geschnitten.

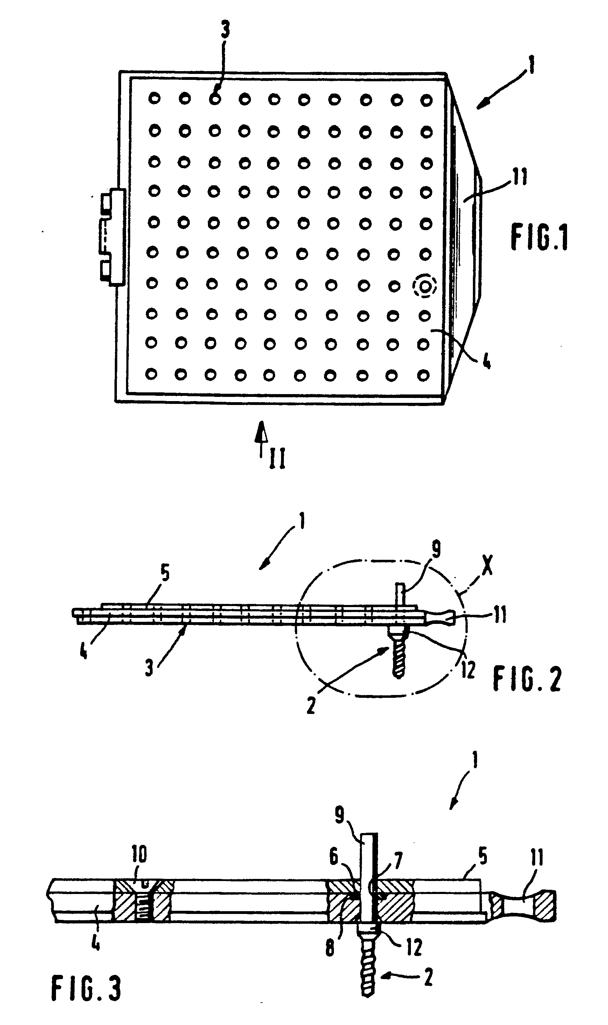

Die eine Griffleiste 11 aufweisende Speicherplatte 1 besteht im wesentlichen aus zwei im wesentlichen quadratischen plattenförmigen Elementen 4, 5 welche mittels Senkkopfschrauben 10 aneinander befestigt sind. Sowohl das untere als Grundplatte ausgebildete plattenförmige Element 3 als auch das obere als Abdeckplatte ausgeführte plattenförmige Element 4 ist mit einem Rechteckraster aus miteinander korrespondierenden Löchern als Werkzeugaufnahmelöcher 3 für die Aufnahme von Werkzeugen 2, im dargestellten Falle Bohrern, ausgestattet. Die Werkzeuge 2 werden, wie insbesondere aus Fig. 3 ersichtlich, von unten mit ihren nach oben weisenden Halteschaft 9 in das entsprechende Werkzeugaufnahmeloch 3 so weit eingesteckt, bis ein Anschlag 12 an der Unterseite des unteren plattenförmigen Elements 3 zur Anlage kommt. Das Einstecken wird dadurch erleichtert, daß die Werkzeugaufnahmelöcher 3 nach unten konisch aufgeweitet sind und geringfügig weiter sind als die Stärke des Halteschafts 9. Zur Halterung des jeweiligen Werkzeugs 2 ist jedem Werkzeugaufnahmeloch 3 ein selbständig austauschbares Belegelement 6 aus elastisch nachgiebigem, vorzugsweise abriebfestem Material, wie beispielsweise Kunststoff oder Gummi, zugeordnet, welches eine dem jeweiligen Werkzeugaufnahmeloch 3 zugeordnete Durchbrechung 7 aufweist. Im dargestellten Beispiel sind die Belegelemente 6 als Flachringe ausgebildet, wobei die Durchbrechungen 7 eine gegenüber den angrenzenden Werkzeugaufnahmeloch 3 geringeren Durchmesser aufweisen. Dieser Durchmesser der Durchbrechungen 7 ist so getroffen, daß die von dem Belegelement 6 aus Kunststoff- oder Gummimaterial auf die Oberfläche des Halteschafts 9 ausgeübten Reibungskräfte ausreichen, um das Werkzeug 2 trotz seines Gewichts in dem entsprechenden Werkzeugaufnahmeloch 3 hängend zu halten. Allerdings kann das Werkzeug 2 aus seiner in Fig. 3 dargestellten Speicherposition beispielsweise mittels eines Greifers leicht wieder nach unten aus der Speicherplatte 1 herausgezogen werden. Aufgrund der Elastizität des Materials der Belegelemente 6 nehmen die vorher entsprechend dem Querschnitt des Halteschafts 9 aufgeweiteten und sich um den Halteschaft 9 spannenden Durchbrechungen 7 wieder die ursprüngliche Gestalt ein. Sollte das Material eines Belegelements 6 bei längerem Gebrauch ermüden, abgenutzt sein oder beschädigt werden, kann es unabhängig von den anderen Belegelementen 6 ohne weiteres gegen ein neues Belegelement 6 ersetzt werden, weil die als Vertiefungen ausgebildeten Ausnehmungen 8 in der einen Oberfläche des plattenförmigen Elements 4 nach dem Abnehmen des plattenförmigen Elements 5 vollständig frei liegen. Der Außendurchmesser der Belegelemente 6 entspricht etwa dem Doppelten des jeweiligen Durchmessers der Durchbrechungen 7, wodurch ein sicherer und fester Sitz der Belegelemente 6 in den Ausnehmungen 8 zwischen den plattenförmigen Elementen 4, 5 gewährleistet und ein Herausrutschen aus der jeweiligen Ausnehmung 8 beim Einstecken oder Herausziehen des Werkzeugs 2 ausgeschlossen ist. Die Ausnehmung 8 kann eine die Dicke des Belegelements 6 geringfügig übersteigende Höhe aufweisen, wodurch das Belegelement 6 eine das Einstecken und Herausziehen nochmals erleichternde, jedoch das reibschlüssige Halten verbessernde axiale Ausbiegbarkeit in dem an die Durchbrechung 7 angrenzenden Bereich erhält.

**Patentansprüche**

1.    Speicherplatte für vorzugsweise mit einer selbsttätigen . Werkzeugwechseleinrichtung ausgerüsteten Werkzeugmaschine, bei welcher jedes einer Vielzahl von Werkzeugen (2) von einem wenigstens eine beispielsweise im wesentlichen horizontal anzuordnende, entsprechende Werkzeugaufnahmelöcher (3) aufweisende Speicherplatte (1) enthaltenden Werkzeugmagazin mittels einer einen Greifer aufweisenden Werkzeugtransporteinrichtung aus der Speicherplatte beispielsweise nach unten herausgezogen und einer Arbeitseinheit übergeben, sowie nach Gebrauch aus der Arbeitseinheit beispielsweise nach unten herausgezogen, wieder zurück zur Speicherplatte (1) gebracht und beispielsweise von unten in eines der Werkzeugaufnahmelöcher (3) gesteckt wird, wobei die Speicherplatte (1) wenigstens zwei aneinander befestigte, mit einer Vielzahl von jeweils zueinander fluchtenden Werkzeugaufnahmelöchern (3) versehene plattenförmige Elemente (4, 5) aufweist, zwischen denen in Ausnehmungen (8) wenigstens eines der plattenförmigen Elemente (4, 5) aufgenommene Mittel zum reibschlüssigen Halten der in einer beispielsweise im wesentlichen vertikalen Position angeordneten Werkzeuge (2) in dem jeweiligen Werkzeugaufnahmeloch (3) angeordnet sind, dadurch gekennzeichnet, daß die in den plattenförmigen Elementen (4,5) gebildeten Werkzeugaufnahmelöcher (3) jeweils zum im wesentlichen spielfreien Halten der Werkzeuge (2) ausgebildet sind und die Mittel zum reibschlüssigen Halten der Werkzeuge (2) als jeweils einem Werkzeugaufnahmeloch (3) zugeordnete, selbständig austauschbare Belegelemente (6) aus elastisch nachgiebigem, vorzugsweise abriebfestem Material, z.B. Kunststoff oder Gummi, ausgebildet sind, welche eine dem jeweiligen Werkzeugaufnahmeloch (3) zugeordnete diesen gegenüber wenigstens über ein Teil ihrer Länge geringfügig verengte Durchbrechung (7) aufweisen.

2. Speicherplatte nach Anspruch 1, dadurch gekennzeichnet, daß die Dicke eines Belegelements (6) geringer als die Höhe einer Ausnehmung (8) ist.

3. Speicherplatte nach Anspruch 1 oder 2, dadurch gekennzeichnet, daß die Belegelemente (6) als Flachringe ausgebildet sind, deren Durchbrechung (7) jeweils einen vorzugsweise gegenüber dem jeweils angrenzenden Werkzeugaufnahmeloch (3) geringfügig kleineren Durchmesser hat.

4. Speicherplatte nach einem der Ansprüche 1 bis 3, dadurch gekennzeichnet, daß die Belegelemente (6) kreisringförmig ausgebildet sind.

5. Speicherplatte nach einem der Ansprüche 1 bis 4, dadurch gekennzeichnet, daß der Außendurchmesser der Belegelemente (6) etwa dem Doppelten des Durchmessers der jeweiligen Durchbrechung (7) entspricht.

6. Speicherplatte nach einem der Ansprüche 1 bis 5, dadurch gekennzeichnet, daß die Ausnehmungen (8) durch sich einander ergänzende Vertiefungen in den einander zugewandten Seiten zweier plattenförmigen Elemente (4, 5) gebildet sind.

7. Speicherplatte nach einem der Ansprüche 1 bis 6, dadurch gekennzeichnet, daß die den Halteschaft (9) des jeweiligen Werkzeugs (2) mit geringem Spiel aufnehmenden Werkzeugaufnahmelöcher (3) an ihrer beispielsweise nach unten zu kehrenden Außenseite, vorzugsweise konisch, aufgeweitet sind.

8. Speicherplatte nach Anspruch 7, dadurch gekennzeichnet, daß die Werkzeugaufnahmelöcher (3) in dem beispielsweise oberen plattenförmigen Element (5) im wesentlichen den gleichen Durchmesser wie die jeweils angrenzenden Werkzeugaufnahmelöcher (3) des beispielsweise unteren plattenförmigen Elements (4) aufweisen.

**Claims**

1. A feeder plate for machine tools, primarily of the type having an autonomous tool changing attachment, in which one of a plurality of small-tools (2) is drawn, for example drawn down, from a tool magazine having at least one feeder plate (1) containing tool storage holes arrayed for example in a substantially horizontal plane, transferred from the feeder plate to a machining unit, drawn out, for example drawn down, from the machining unit after use and returned, for example from below, to one of the tool storage holes (3), the feeder plate (1) having at least two plate-shaped elements (4,5) containing a plurality of mutually registering tool storage holes (3), between which plate-shaped elements (4,5), in pockets (8) in at least one thereof, means are provided for the frictional retention of each tool (2) in for example a substantially vertical position in its tool storage hole (3), characterized in that the tool storage holes (3) in the plate-shaped elements (4,5) are individually designed to hold a tool (2) with substantially zero clearance, whilst the means provided for the frictional retention of the tools (2) consist of independently interchangeable linings (6) for each tool storage hole (3), made from a resiliently compressible and preferably wear-resisting material such as a synthetic plastic or rubber, for example, the bore (7) of which linings is slightly smaller than the associated tool storage hole (3) over at least part of its length.

2. A feeder plate as in Claim 1, characterized in that the thickness of the linings (6) is less than the height of the pockets (8).

3. A feeder plate as in Claim 1 or 2, characterized in that the linings (6) are designed as flat rings, the bore (7) in each of which is slightly smaller in diameter than the corresponding tool storage hole (3) in which it is contained.

4. A feeder plate as in any of Claims 1 to 3, characterized in that the linings (6) have a circular ring shape.

5. A feeder plate as in any of Claims 1 to 4, characterized in that the outer diameter of the linings (6) is approximately twice the diameter of the corresponding bore (7).

6. A feeder plate as in any of Claims 1 to 5, characterized in that the pockets (8) are formed by registering recesses on the adjacent faces of the pair of plate-shaped elements (4,5).

7. A feeder plate as in any of Claims 1 to 6, characterized in that the tool storage holes (3), which accommodate the shanks (9) of the tools (2) with little clearance, increase in diameter, preferably conically, for example towards their underface.

8. A feeder plate as in Claim 7, characterized in that the tool storage holes (3) in for example the upper plate-shaped element (5) have substantially the same diameters as the corresponding tool storage holes (3) in for example the lower plate-shaped element (4).

**Revendications**

1. Plateau de stockage pour machine-outil équipée de préférence d'un dispositif de changement d'outil automatique, dans laquelle chaque outil parmi une pluralité d'outils (2) d'un magasin à outils comportant au moins un plateau de stockage (1), disposé par exemple essentiellement horizontalement et muni de trous de réception d'outil (3) adaptés, est extrait du plateau de stockage, par exemple par le bas, par un dispositif de transport comportant une pince et est transféré vers une unité de travail, et après utilisation est extrait de l'unité de travail, par exemple par le bas, et est ramené vers le plateau de stockage (1) et introduit, par exemple par le bas, dans l'un des trous de réception d'outil (3), le plateau de stockage(1) comportant au moins deux éléments (4, 5) en forme de plaque assemblés entre eux et munis chacun d'une pluralité de trous de réception d'outil (3) mutuellement alignés, entre lesquels sont disposés, à l'intérieur de logements (8) aménagés dans l'un au moins des éléments en forme de plaque (4, 5), des moyens pour tenir par frottement les outils (2) placés dans une position, par exemple sensiblement verticale, dans les trous de réception d'outil (3) respectifs, caractérisé en ce que les trous de réception d'outil (3) aménagés dans les éléments en forme de plaques (4, 5) sont réalisés chaque fois pour tenir les outils (2) essentiellement sans jeu, et les moyens pour tenir par frottement les outils (2) sont réalisés sous forme de garnitures (6) autonomes échangeables associées chaque fois à un trou de réception d'outil (3), en matériau élastique, de préférence résistant à l'usure, par exemple en matière plastique ou en caoutchouc, qui présentent une découpure (7) légèrement rétrécie sur une partie de sa longueur par rapport au trou de réception d'outil (3) associé.

2. Plateau de stockage selon la revendication 1 caractérisé en ce que l'épaisseur d'une garniture (6) est inférieure à la hauteur d'un logement (8).

3. Plateau de stockage selon la revendication 1 ou 2 caractérisé en ce que les garnitures (6) sont réalisées sous forme de bagues aplaties, dont la découpure (7) a chaque fois un diamètre légèrement plus faible que le trou de réception d'outil (3) voisin.

4. Plateau de stockage selon l'une des revendications 1 à 3 caractérisé en ce que les garnitures (6) ont une forme circulaire.

5. Plateau de stockage selon l'une des revendications 1 à 4 caractérisé en ce que le diamètre extérieur des garnitures (6) correspond sensiblement à deux fois le diamètre de la découpure (7) associée.

6. Plateau de stockage selon l'une des revendications 1 à 5 caractérisé en ce que les logements (8) sont formées par des cavités mutuellement complémentaires dans les faces en vis-à-vis de deux éléments en forme de plaques (4, 5).

7. Plateau de stockage selon l'une des revendications 1 à 6 caractérisé en ce que les trous de réception d'outil (3) recevant avec un jeu réduit la queue (9) des outils concernés (2) sont évasés, de préférence en forme de cône, au niveau par exemple de leur face extérieure tournée vers le bas.

8. Plateau de stockage selon la revendication 7 caractérisé en ce que les trous de réception d'outil (3) dans par exemple l'élément en forme de plaque supérieur (5) ont essentiellement le même diamètre que les trous de réception d'outil (3) voisins correspondants de par exemple l'élément en forme de plaque (4) inférieur.

FIG.1

FIG.2

FIG.3